Europäisches Patentamt

European Patent Office

Office européen des brevets

(11) Numéro de publication : **0 346 223 B1**

(12) **FASCICULE DE BREVET EUROPEEN**

(19)

(45) Date de publication du fascicule du brevet :
**18.03.92 Bulletin 92/12**

(51) Int. Cl.⁵ : **B60K 31/04**

(21) Numéro de dépôt : **89401573.4**

(22) Date de dépôt : **07.06.89**

(54) **Régulateur de vitesse pour véhicule automobile.**

(30) Priorité : **09.06.88 FR 8807686**

(43) Date de publication de la demande :
**13.12.89 Bulletin 89/50**

(45) Mention de la délivrance du brevet :
**18.03.92 Bulletin 92/12**

(84) Etats contractants désignés :
**DE ES GB IT NL SE**

(56) Documents cités :
**EP-A- 0 020 860**
**DE-A- 2 540 182**
**DE-A- 3 730 964**
**GB-A- 2 176 634**
**GB-A- 2 187 793**
**US-A- 3 476 205**
**US-A- 4 181 103**

(73) Titulaire : **JAEGER**
**2, rue Baudin**
**F-92303 Levallois-Perret (FR)**

(72) Inventeur : **Dupard, Gilbert**
**37, rue Félix Faure**
**F-92700 Colombes (FR)**
Inventeur : **Reymond, Philippe**
**26, rue Georges Boulet**
**F-91330 Yerres (FR)**

(74) Mandataire : **Warcoin, Jacques et al**
**Cabinet Régimbeau 26, avenue Kléber**
**F-75116 Paris (FR)**

Jouve, 18, rue Saint-Denis, 75001 PARIS

EP 0 346 223 B1

## Description

La présente invention concerne le domaine des régulateurs de vitesse pour véhicule automobile.

Dans le cadre de la présente demande de brevet, on entend par "régulateur de vitesse", un dispositif conçu pour agir sur un organe doseur de carburant, la pompe d'injection dans un moteur diesel ou le papillon de contrôle d'arrivée d'air dans un moteur à essence, afin de contrôler la vitesse du véhicule automobile, de préférence afin de limiter la vitesse maximale de celui-ci à une valeur prédéterminée.

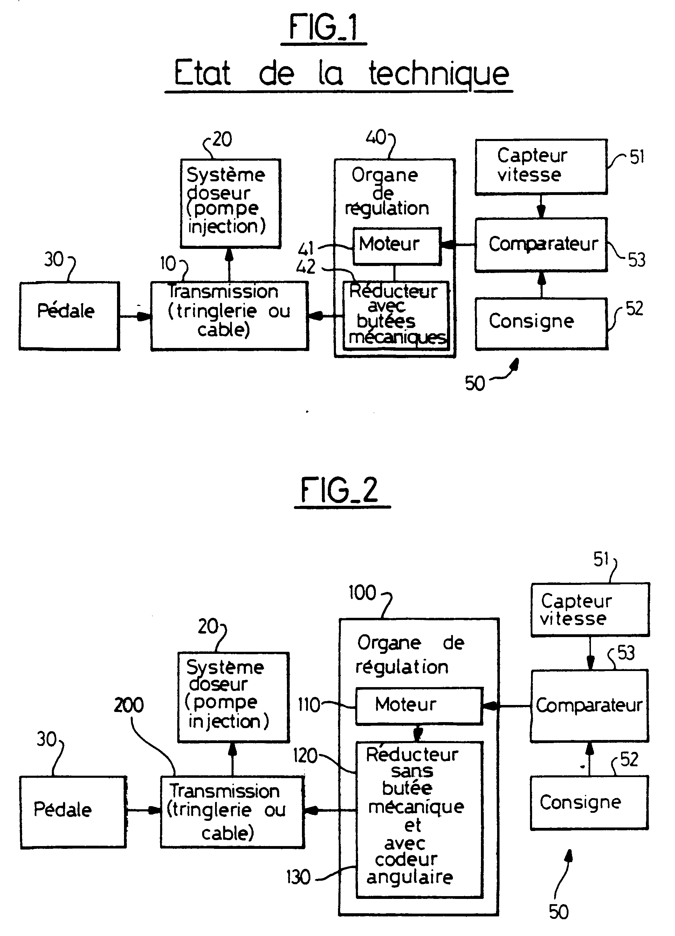

On a illustré schématiquement sur la figure 1 annexée, la structure d'un régulateur de vitesse classique.

Ce régulateur comprend un ensemble de transmission 10 qui agit sur l'organe 20 doseur de carburant.

L'ensemble de transmission 10 est en général formé par une tringlerie ou un système à câble.

L'ensemble de transmission 10 est actionné par la pédale d'accélérateur 30. L'ensemble de transmission 10 est conçu de telle sorte que l'enfoncement progressif de la pédale d'accélérateur 30 conduise à une élévation progressive du débit de carburant dans l'organe doseur 20, donc une élévation progressive du régime moteur.

Le régulateur comprend en outre un organe de régulation 40 qui agit également sur l'ensemble de transmission 10. L'organe de régulation 40 et l'ensemble de transmission 10 associé sont conçus pour limiter la plage de commande de l'organe doseur 20, en fonction de la vitesse réelle du moteur principal de telle sorte que, quelle que soit la position de la pédale d'accélérateur 30, la vitesse du véhicule ne dépasse pas une vitesse maximale prédéterminée.

L'organe de régulation 40 comprend généralement un moteur électrique 41 et un réducteur de vitesse à engrenage 42 entraîné par l'arbre de sortie du moteur électrique 41.

Le moteur électrique 41 est piloté par un signal issu d'un circuit de contrôle 50 sensible à la vitesse du véhicule. Le circuit de contrôle 50 comprend généralement un capteur 51 qui mesure la vitesse réelle du véhicule, un élément 52 qui définit une vitesse de consigne et un comparateur 53 qui génère à sa sortie un signal pilote, appliqué au moteur 41, qui est déduit de l'écart entre la vitesse réelle issue du capteur 51 et la vitesse de consigne issue de l'élément 52.

La sortie de l'organe de régulation 40, qui est reliée à l'ensemble de transmission 10, est formée par la sortie du réducteur 42. Celui-ci comprend un codeur angulaire, généralement un potentiomètre, qui permet de contrôler que la position angulaire de l'arbre de sortie du réducteur 42 correspond effectivement à la position de consigne appropriée définie sur la base du signal issu du circuit de contrôle 50.

Enfin, l'agencement des régulateurs antérieurs était tel que les constructeurs ont jusqu'ci prévu deux butées mécaniques au niveau de l'étage de sortie du réducteur 42 pour limiter l'angle de débattement angulaire de l'arbre de sortie de ce réducteur.

Les réducteurs de vitesse du type évoqué ci-dessus ont déjà rendu de grands services. Ils présentent cependant les inconvénients suivants.

La Demanderesse a tout d'abord constaté que, lors du montage, des organes de régulation 40 étaient parfois détériorés. Plus précisément, lorsque l'arbre de sortie du réducteur est entraîné à rotation, l'induit du moteur est lui-même entraîné à une vitesse plus élevée, en fonction du rapport de multiplication défini par le réducteur 42. De ce fait, lorsque l'étage de sortie du réducteur 42 vient en appui contre une butée mécanique précitée, l'arrêt brutal imposé à l'induit peut conduire à une détérioration de celui-ci, par exemple à une rupture d'un goupille assurant une liaison entre un pignon de réducteur et l'arbre d'induit, ou une rupture de denture sur un pignon de l'étage d'entrée du réducteur.

D'autre part, la Demanderesse a déterminé que les mêmes inconvénients de détérioration de l'organe de régulation 40 pouvaient survenir lorsque, à l'utilisation, à l'état non alimenté de l'organe de régulation 40, un usager enfonçait violemment la pédale d'accélérateur 30. En effet, l'entraînement rapide de la pédale d'accélérateur 30 provoque un déplacement rapide de l'arbre de sortie du réducteur 42 et de l'induit du moteur 41, par l'intermédiaire de l'ensemble de transmission 10, susceptible de conduire à une détérioration de l'organe de régulation lorsque la pédale d'accélérateur ou l'étage de sortie du réducteur viennent en butée.

La présente invention a pour but d'éliminer ces inconvénients.

Elle propose à cet effet un régulateur du type connu en soi comprenant :

– un organe de régulation comportant un moteur électrique piloté par un signal issu d'un circuit de contrôle sensible à la vitesse du véhicule, et un réducteur de vitesse à engrenage entraîné par l'arbre de sortie du moteur électrique, et

– un ensemble de transmission actionné, d'une part, par la pédale d'accélérateur du véhicule, d'autre part, par l'arbre de sortie du réducteur pour commander un organe doseur de carburant du moteur principal,

caractérisé par le fait que ni le moteur électrique, ni le réducteur de vitesse à engrenage de l'organe de régulation ne comportent de butée mécanique, de telle sorte que l'arbre de sortie du réducteur de vitesse est susceptible de rotation sur 360°.

Ainsi, les risques antérieurs de détérioration de l'organe de régulation, en particulier lors du montage, sont éliminés.

D'autres caractéristiques, buts et avantages de la présente invention apparaîtront à la lecture de la description détaillée qui va suivre, et en regard des dessins annexés donnés à titre d'exemples non limitatifs et sur lesquels :

– la figure 1 précédemment décrite illustre schématiquement l'état de la technique,

– la figure 2 représente schématiquement un régulateur conforme à la présente invention,

– la figure 3 représente un premier exemple de réalisation d'un ensemble de transmission conforme à la présente invention, en position initiale d'utilisation, c'est-à-dire pédale d'accélérateur non enfoncée et organe de régulation en position de consigne initiale,

– la figure 4 représente le même ensemble de transmission en position de régime moteur maximal, sans limitation de vitesse, c'est-à-dire pédale d'accélérateur enfoncée et organe de régulation maintenu en position de consigne initiale,

– la figure 5 représente le même ensemble de transmission lors de l'entrée en service de l'organe de régulation, pédale d'accélérateur maintenu enfoncée,

– la figure 6 représente le même ensemble de transmission lors d'une limitation maximale du débit de carburant, donc de vitesse, imposée par l'organe de régulation, avec pédale d'accélérateur enfoncée,

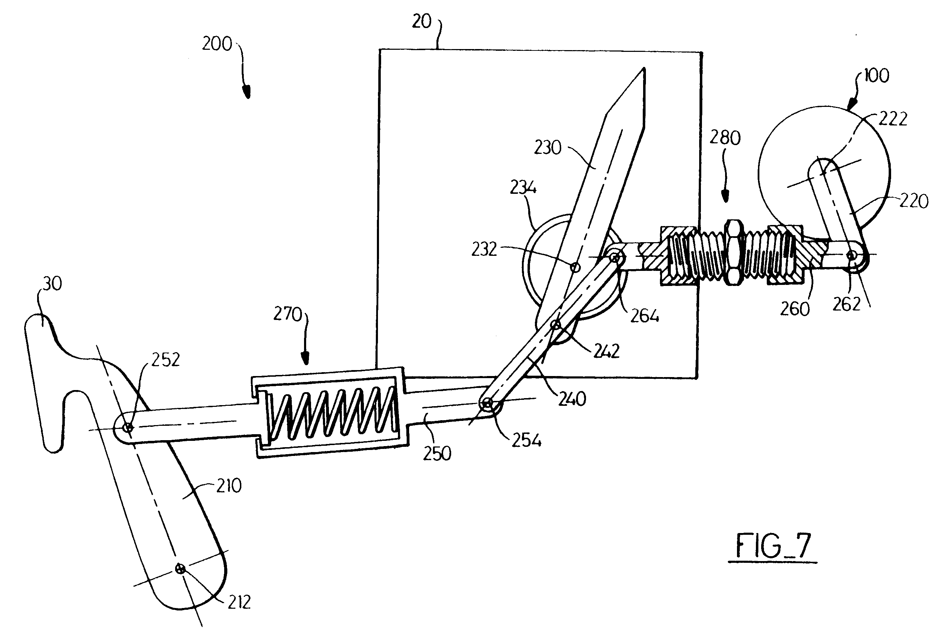

– la figure 7 représente des perfectionnements apportés en variante à l'ensemble de transmission conforme au premier exemple de réalisation,

– la figure 8 représente schématiquement un codeur angulaire apte à coopérer avec l'organe de régulation conforme à l'invention,

– la figure 9A représente un ensemble de transmission conforme à un second mode de réalisation de la présente invention, en position initiale d'utilisation, c'est-à-dire pédale d'accélérateur non enfoncée et organe de régulation en position de consigne initiale,

– la figure 9B représente le même ensemble de transmission en position de régime moteur maximal, sans limitation de vitesse, c'est-à-dire pédale d'accélérateur enfoncée et organe de régulation maintenue en position de consigne initiale,

– la figure 9C représente le même ensemble de transmission lors d'une limitation maximale de débit de carburant imposée par l'organe de régulation avec pédale d'accélérateur enfoncée,

– la figure 10A représente un ensemble de transmission conforme à un troisième mode de réalisation conforme à la présente invention, en position initiale d'utilisation, c'est-à-dire pédale d'accélérateur non enfoncée et organe de régulation en position de consigne initiale,

– la figure 10B représente le même ensemble de transmission en position de régime moteur maximale, sans limitation de vitesse, c'est-à-dire pédale d'accélérateur enfoncée et organe de régulation maintenu en position de consigne initiale,

– la figure 10C représente le même ensemble de transmission en position de limitation maximale de débit de carburant imposée par l'organe de régulation, avec pédale d'accélérateur enfoncée,

– la figure 11A représente un ensemble de transmission conforme à un quatrième mode de réalisation de la présente invention, en position initiale d'utilisation, c'est-à-dire pédale d'accélérateur non enfoncée et organe de régulation en position de consigne initiale,

– la figure 11B représente le même ensemble de transmission en position de régime moteur maximal, sans limitation de vitesse, c'est-à-dire pédale d'accélérateur enfoncée et organe de régulation maintenu en position de consigne initiale, et

– la figure 11C représente le même ensemble de transmission en position de limitation maximale de vitesse imposée par l'organe de régulation avec pédale d'accélérateur enfoncée.

Comme illustré schématiquement sur la figure 2 annexée, le régulateur conforme à la présente invention comprend pour l'essentiel un organe de régulation 100 et un ensemble de transmission 200.

L'organe de régulation 100 comprend lui-même un moteur électrique 110, un réducteur de vitesse à engrenage 120 et un codeur angulaire 130.

Le moteur électrique 110, classique en soi, est piloté par un signal issu du circuit de contrôle 50 précité. Le circuit de contrôle 50 comprenant un capteur de vitesse 51, un élément générateur de point de consigne 52 et un comparateur 53, est classique en soi et ne sera pas décrit plus en détail par la suite.

Le réducteur de vitesse 120 à engrenage est entraîné par l'arbre de sortie du moteur électrique 110.

Lors de la mise sous tension du régulateur, la vitesse réelle du véhicule détectée par le capteur 51 est inférieure à la vitesse maximale autorisée. Le signal issu du circuit de contrôle 50 est appliqué au moteur 110 pour positionner l'arbre de sortie du réducteur 120 dans une position de consigne initiale. Dans cette position de consigne initiale, l'organe de régulation 110 est sans effet sur l'ensemble de transmission 200. En l'absence de sollicitation de la pédale d'accélérateur 30 le système doseur 20 est donc placé en régime ralenti. L'actionnement de la pédale d'accélérateur 30 conduit par l'intermédiaire de l'ensemble de transmission 200 à un accroissement du débit dans l'organe doseur 20.

L'organe de régulation 100 est maintenu en position de consigne initiale tant que la vitesse réelle du véhicule détectée par le capteur 51 reste inférieure à la vitesse maximale de consigne définie par l'élément 52.

Lorsque la vitesse réelle du véhicule détectée par le capteur 51 dépasse la vitesse maximale de consigne définie par l'élément 52, le signal issu du comparateur 53 et appliqué au moteur 110 induit un déplacement de l'arbre de sortie du réducteur 120. Ce dernier agit alors sur l'ensemble de transmission 200 afin de réduire le débit de carburant dans l'organe doseur 20.

Selon une caractéristique essentielle de la présente invention, le réducteur de vitesse 120 est dépourvu de butée mécanique. Il est donc susceptible de tourner sur 360°.

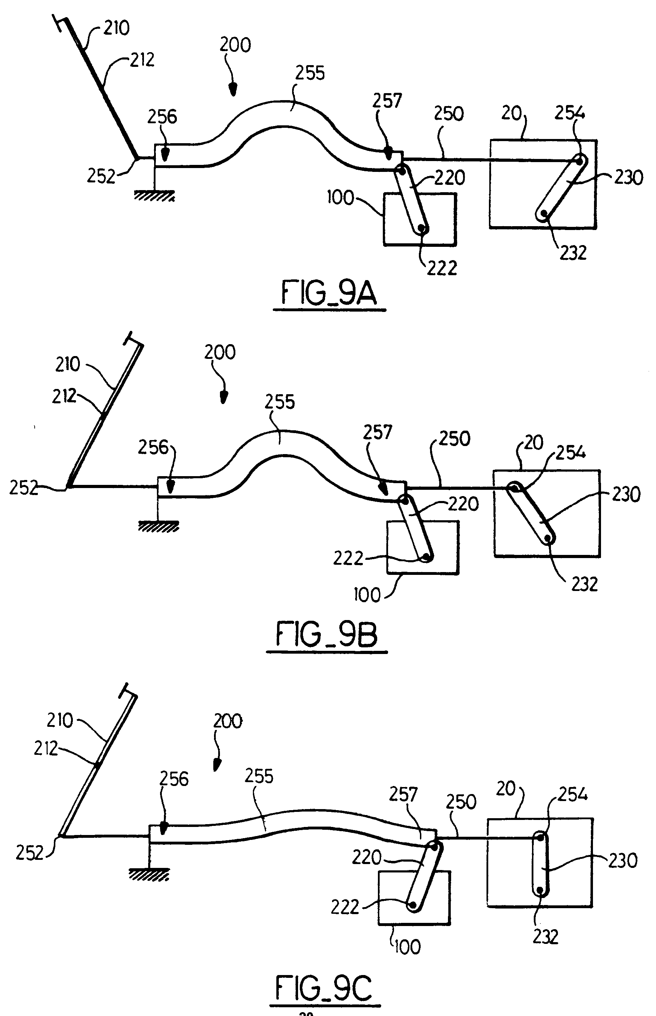

Le codeur angulaire 130 permet de déterminer la position angulaire de l'arbre de sortie du réducteur autour de son axe. Le codeur angulaire 130 est avantageusement formé d'un potentiomètre rotatif comportant une piste annulaire 132 en couronne couvrant sensiblement 360°, comme illustré sur la figure 8 annexée.

La piste 132 comporte cependant une fente radiale 136. Elle comporte de plus un secteur résistif 134 espacé de la fente 136 et de part et d'autre duquel sont prévus des secteurs électriquement conducteurs 137, 138. L'ouverture angulaire du secteur 134 est égale au débattement angulaire de l'arbre de sortie du réducteur 120 entre sa position de consigne initiale précitée et sa position de limitation maximale. Cette ouverture angulaire peut être par exemple de l'ordre de 90°.

Le potentiomètre comprend en outre un curseur qui se déplace sur la piste 132, par pivotement autour de l'axe 131 du potentiomètre. De préférence, le curseur est solidaire de l'arbre de sortie du réducteur de vitesse 110 alors que la piste 132 est fixe sur le carter du réducteur. Une disposition inverse est cependant possible. La valeur de la résistance mesurée entre l'un des secteurs 137 ou 138 et le curseur mobile du potentiomètre permet de déterminer si le curseur est sur le secteur 137, le secteur 138 ou le secteur 134. La mesure de cette valeur de résistance permet donc de connaître directement la position angulaire de l'arbre de sortie du réducteur par rapport à son axe et donc de contrôler que la position angulaire de cet arbre de sortie correspond effectivement à la position de consigne recherchée en fonction de la vitesse instantanée du véhicule. Bien entendu dans le cadre de la présente invention le potentiomètre 130 ne doit pas comporter non plus de butée mécanique. En d'autres termes il autorise une mesure sur 360°.

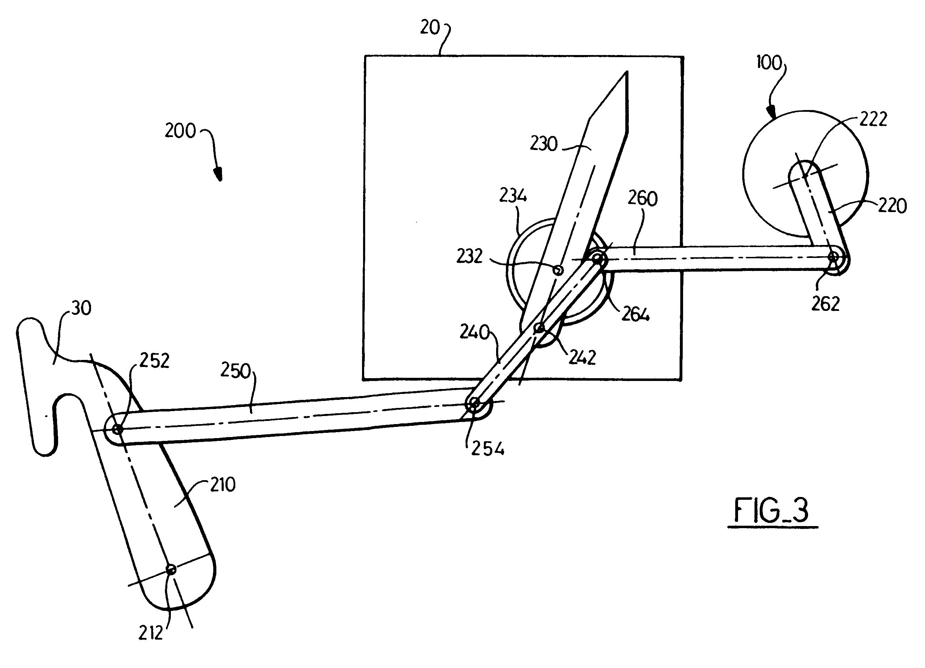

L'ensemble de transmission illustré sur les figures 3 à 6 comprend un maneton principal 210, un maneton secondaire 220, un levier 230, une bielle 240, un élément principal de liaison 250 et un élément secondaire de liaison 260.

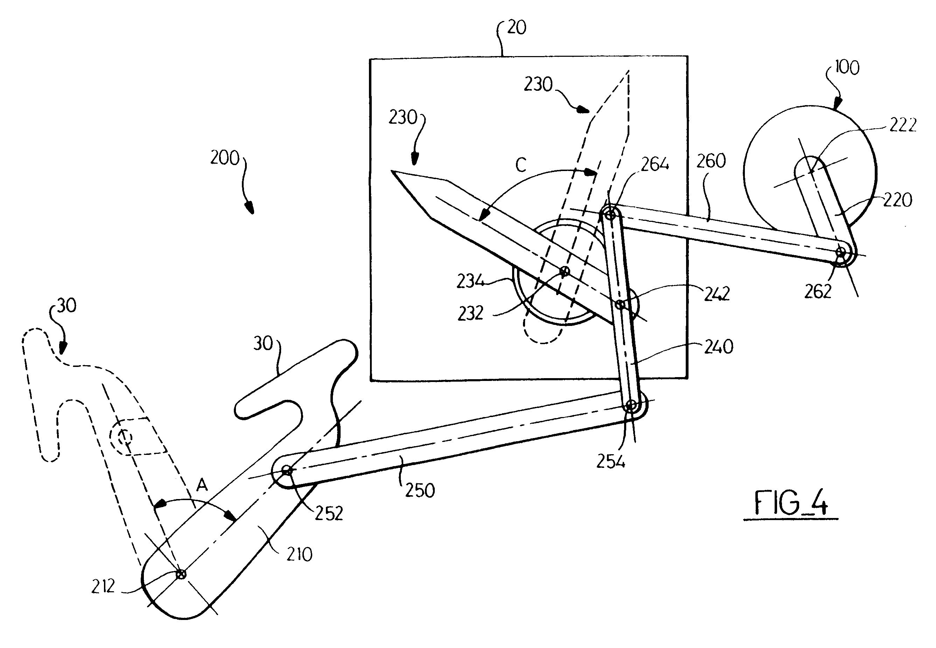

Le maneton principal 210 est porté par la pédale d'accélérateur 30. Il pivote autour d'un axe fixe 212 avec cette pédale. Le débattement angulaire maximal du maneton principal 210 est référencé A sur la figure 4. Le maneton principal 210 est sollicité élastiquement avec la pédale 30 vers la position de repos illustrée sur la figure 3.

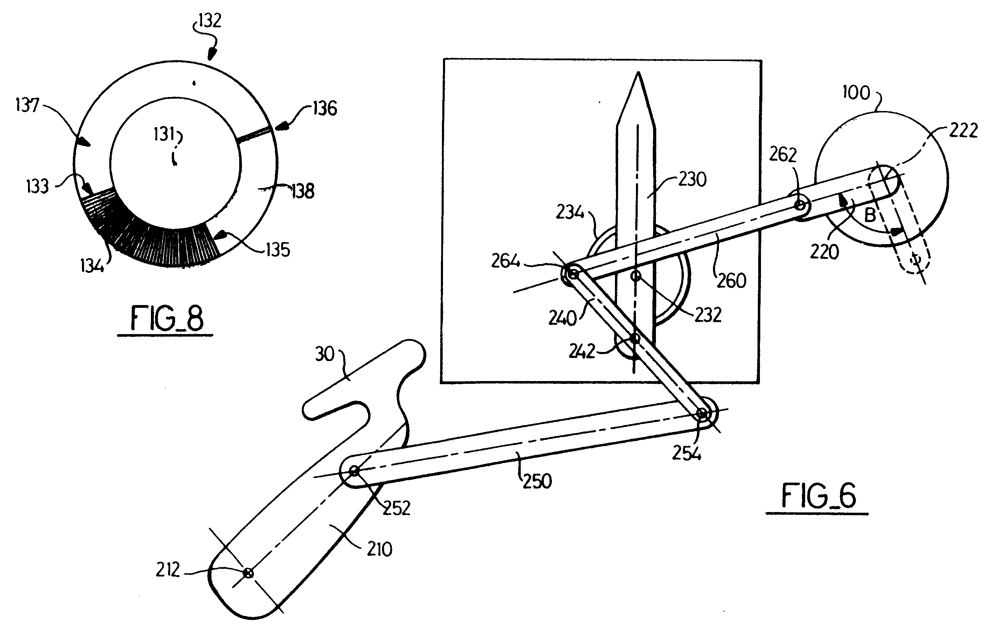

Le maneton secondaire 220 est porté par l'arbre de sortie du réducteur de vitesse 120. Il pivote donc autour de l'axe fixe 222 de celui-ci. Le débattement angulaire du maneton secondaire 220 lors du passage du réducteur 120 de sa position de consigne initiale, à sa position de limitation maximale, est référencé B sur la figure 6. Ce débattement correspond à l'ouverture angulaire du secteur 134 du codeur 130 ; il est donc de préférence de l'ordre de 90°.

Le levier 230 est lié à l'organe doseur de carburant 20, par exemple la pompe d'injection, pour régler le débit de celle-ci. Le levier 230 est porté à pivotement autour d'un axe fixe 232 sur le carter de l'organe doseur 20. Le débattement angulaire maximal du levier 230 est référencé C sur la figure 4.

Le levier 230 est sollicité élastiquement vers la position de repos, correspondant à un régime ralenti, illustré sur la figure 3, par un ressort 234.

La bielle 240 est articulée sur le levier 230 au niveau d'un axe 242 excentré par rapport à l'axe 232.

L'élément principal de liaison 250 est articulé respectivement à ces extrémités, d'une part, sur le maneton principal 210 autour d'un axe 252 excentré par rapport à l'axe 212, d'autre part, sur la bielle 240 autour d'un axe 254 excentré par rapport à l'axe 242.

L'élément secondaire de liaison 260 est articulé, respectivement à ses extrémités, d'une part, sur le maneton secondaire 220 autour d'un axe 262 excentré par rapport à l'axe 222, d'autre part, sur la bielle 240 autour d'un axe 264 excentré par rapport à l'axe 242.

Les axes 212, 222, 232, 242, 252, 254, 262 et 264 précités sont tous parallèles entre eux et orthogonaux aux plans des figures 3 à 6.

Selon la représentation donnée sur les figures 3 à 6, la bielle 240 est rectiligne et les axes 254 et 264 sont diamètralement opposés par rapport à l'axe central 242 de la bielle 240. Cette disposition n'est cependant pas impérative.

Selon une caractéristique préférentielle de la présente invention, la distance séparant l'axe 232 du levier 230 et l'axe d'articulation 242 de la bielle 240 sur le levier 230 est égale à la distance séparant l'axe d'articulation 264 de l'élément secondaire de liaison 260 sur la bielle 240 et l'axe d'articulation 242 de la bielle 240 sur le levier 230. Par ailleurs, en position de repos de la pédale d'accélérateur 30 et en position de consigne initiale du maneton secondaire 220, l'axe 232 du levier 230 est de préférence coaxial de l'axe d'articulation 264 de l'élément secondaire de liaison 260 sur la bielle 240.

Ces dispositions géométriques n'ont pas été représentées sur les figures 2 à 6 pour permettre de mieux distinguer les axes 232 et 264. Ces dispositions géométriques permettent de commander l'organe doseur 20 à l'aide de la pédale 30 de façon identique à une installation dépourvue de régulateur de vitesse, tant que l'organe de régulation reste en position initiale, c'est-à-dire tant que la vitesse réelle du véhicule détectée par le capteur 51 ne dépasse pas la vitesse maximale de consigne définie par l'élément 52.

Selon une autre caractéristique préférentielle de la présente invention, l'ensemble de transmission est réglé (c'est-à-dire que la longueur entre axe des différents éléments 210, 220, 230, 240, 250, 260 et la position relative de ces axes sont réglées) de telle sorte que lorsque la pédale d'accélérateur 30 a atteint sa position d'enfoncement maximale, comme illustré sur les figures 4, 5 et 6, et que l'organe de régulation impose une limitation maximale de débit dans l'organe doseur 20, les axes 262, 264 de l'élément secondaire de liaison 260 et la l'axe 222 du maneton secondaire 220 soient coplanaires.

On notera que pour faciliter le pivotement de l'ensemble de transmission 200 et éviter tout blocage de celui-ci en raison par exemple de défaut de parallélisme entre les différents axes d'articulation, les axes 252, 254, 262, 264, des éléments de liaison principale 250 et secondaire 260 peuvent être matérialisés par des rotules.

Par ailleurs, la longueur du tourillon matérialisant l'axe 264 doit de préférence autoriser un croisement du levier 230 et de l'élément secondaire de liaison 260.

Le fonctionnement du régulateur illustré sur les figures 2 à 6 est pour l'essentiel le suivant.

Lorsque l'alimentation électrique du moteur, donc de l'organe de régulation 100, est coupée, l'ensemble de transmission 200, en particulier le maneton secondaire 220, peut prendre une position aléatoire suite à une sollicitation quelconque de la pédale d'accélérateur 30.

Lors de la mise en service de l'alimentation électrique, le moteur 110 de l'organe de régulation est piloté par le circuit de contrôle 50 pour déplacer le maneton secondaire 220 vers la position de consigne initiale telle qu'illustrée sur la figure 3.

Dans cette position de consigne initiale, le curseur du codeur 130 est superposé à l'extrémité 135 du secteur résistif 134 de la piste 132.

On notera que lors de la mise en service de l'alimentation électrique, la valeur de la résistance aux bornes du potentiomètre est mesurée par le circuit de contrôle afin de déterminer si le curseur est placé en regard du secteur conducteur 137, du secteur résistif 134 ou du secteur conducteur 138. Selon que le curseur est détecté en regard de l'un ou l'autre des secteurs conducteurs 137 ou 138, le déplacement du maneton secondaire 220 vers sa position de consigne initiale est opéré dans un sens ou dans l'autre.

En position de consigne initiale du maneton secondaire 220, et lorsque la pédale d'accélérateur 30 n'est pas enfoncée, le levier 230 occupe la position de repos illustrée sur la figue 3, grâce à la sollicitation du ressort 234. Cette position de repos du levier 230 correspond au régime ralenti du moteur du véhicule.

Lorsque l'utilisateur appuie sur la pédale d'accélérateur 30, comme illustré sur la figure 4, le levier 230 est entraîné à rotation autour de l'axe 232, dans le sens contraire des aiguilles d'une montre, vers une position de régime maximum du moteur.

Cette position de régime maximum est atteinte lorsque le maneton secondaire 220 est en position de consigne initiale alors que la pédale d'accélérateur a atteint sa position d'enfoncement maximal.

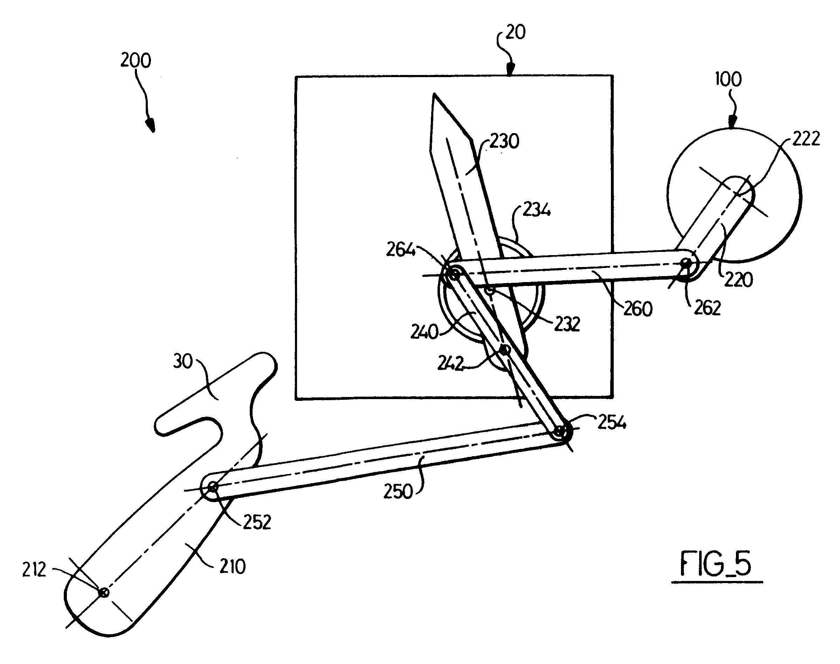

Si cette position de régime maximum du moteur correspond à un dépassement de la vitesse maximale autorisée, le circuit de contrôle 50 applique sur le moteur 110 de l'organe de régulation un signal tendant à déplacer le maneton secondaire 220, comme illustré sur la figure 5, vers une position de limitation.

Le déplacement du maneton secondaire 220 vers la position de limitation opère sur la bielle 240 et donc sur le levier 230 une action opposée à l'enfoncement de la pédale d'accélérateur 30.

Le levier 230 est alors déplacé dans le sens des aiguilles d'une montre autour de l'axe 232. Le régime du moteur est ainsi réduit pour limiter la vitesse du véhicule.

On a illustré sur la figure 5 la position de l'ensemble de transmission 200 en position d'enfoncement maximal de la pédale lorsque l'organe de régulation 100 impose une position intermédiaire au maneton secondaire 220.

On a illustré sur la figure 6 la position de l'ensemble de transmission en position d'enfoncement maximal de la pédale, lorsque l'organe de régulation 100 impose une position de limitation maximale au maneton secondaire 220. On notera que dans cette position, l'axe 222 de l'organe de régulation et les axes 262, 264 de l'élément secondaire de liaison sont coplanaires. Le levier 230 est dans une position de consigne prédéterminée correspondant généralement à un régime de 1200 t/mn. La position de limitation maximale atteinte théoriquement par l'organe de régulation est contrôlée par la présence du curseur sur l'extrémité 133 de la piste résistive 134.

La disposition coplanaire des axes 222, 262 et 264 lors de l'enfoncement maximal de la pédale et en position de limitation maximale du maneton secondaire 220 apporte les deux avantages suivants.

Lorsque, à l'état non alimenté de l'organe de régulation 100, l'utilisateur enfonce violemment la pédale d'accélérateur 30, l'ensemble de transmission est entraîné dans la position précitée illustrée sur le figure 6. Comme indiqué précédemment, le maneton secondaire 220 et l'ensemble secondaire de liaison 260 sont entraînés vers une position d'alignement de sorte que les axes 222, 262 et 264 soient coplanaires.

Le levier 230 est entraîné vers sa position de consigne prédéterminée. Cependant, lorsque la pédale d'accélérateur 30 arrive en butée, le maneton secondaire 220 n'est pas bloqué brutalement mais peut osciller légèrement de part et d'autre de la disposition coplanaire des axes 222, 264 et 262 grâce au pivotement possible du levier 230 et de la bielle 240. Ainsi, tout risque de destruction de l'organe de régulation 100 est évité.

Par ailleurs, si l'organe de régulation 100 devient accidentellement déficient suite à une panne électrique, c'est-à-dire que le maneton secondaire 220 devient libre de pivoter autour de son axe 222, lorsque l'utilisateur appuie à fond sur la pédale d'accélérateur, la tringlerie 200 reprend la position représentée sur la figure 6. Le système est alors en position de régulation maximale. Le véhicule ne peut donc dépasser la vitesse maximale autorisée. Il peut cependant rallier un lieu de réparation à vitesse raisonnable.

Le cas échéant, un système compensateur de longueur peut être prévu sur l'un au moins des éléments composant l'ensemble de transmission 200. Un tel système compensateur de longueur a pour but d'autoriser un allongement ou un rétrécissement de l'élément considéré en cas de sollicitation excessive de l'ensemble de transmission.

On a par exemple illustré schématiquement sous la référence 270 un système compensateur de longueur sur l'élément principal de liaison 250 sur la figure 6.

Par ailleurs, pour faciliter le montage du système, de préférence l'un au moins des éléments de l'ensemble de transmission est ajustable en longueur. On a par exemple illustré schématiquement sous la référence 280 un système vis-écrou d'ajustage en longueur de l'élément secondaire de liaison 260 sur la figure 6.

Selon le mode de réalisation illustré sur les figures 3 à 6, l'élément principal de liaison 250 et l'élément secondaire de liaison 260 travaillent à la poussée sur la bielle 240.

L'homme de l'art comprendra cependant aisément que l'agencement de l'ensemble de transmission 200 peut être modifié de sorte que l'élément principal de liaison 250 et/ou l'élément secondaire de liaison 260 travaillent à la traction sur la bielle 240.

Lorsqu'un élément de liaison 240 ou 260 travaille à la poussée, il doit être formé d'une tringle rigide. Lorsqu'un élément de liaison 240 ou 260 travaille à la traction, il peut être formé soit d'une tringle, soit d'un câble.

On a représenté sur les figures 9A, 9B et 9C un second mode de réalisation dans lequel l'ensemble de transmission 200 comprend:

    – un maneton principal 210 porté à pivotement par la pédale d'accélérateur 30 autour d'un axe 212,

    – un levier 230 lié à l'organe doseur de carburant

20 du moteur principal et susceptible de pivotement par rapport au carter de cet organe 20 autour d'un axe 232,

    – un élément principal de liaison 250 relié en 252 au maneton principal 210 et relié en 254 au levier 230, et

    – un maneton secondaire 220 porté par l'arbre de sortie du réducteur de vitesse 120 pour pivoter autour de l'axe 222.

L'élément principal de liaison 250 est formé d'un câble engagé dans une gaine 255. Une première extrémité 256 de la gaine est fixe. La seconde extrémité 257 de la gaine 255, est portée par le maneton secondaire 220.

Le pivotement du maneton secondaire 220 entre une position de consigne initiale représentée sur les figures 9A, 9B et sa position de régulation maximale illustrée sur la figure 9C permet de modifier la longueur active du câble 250.

Le levier 230 est sollicité élastiquement vers une position de repos, illustrée sur la figure 9A qui correspond à une position de régime ralenti.

Lorsque la pédale d'accélérateur 30 est non enfoncée et le maneton secondaire 220 est en position de consigne initiale comme illustré sur la figure 9A, le levier 230 est en position de repos, donc de régime ralenti.

Lorsque la pédale d'accélérateur 30 est enfoncée comme illustré sur la figure 9B, le levier 230 est déplacé vers sa position de régime maximal. Si la vitesse réelle du véhicule dépasse la vitesse maxi imposée, le maneton secondaire 220 est déplacé vers sa position de limitation maximale comme illustré sur la figure 9C pour allonger la gaine 255 et ramener le levier 230 dans une position intermédiaire entre la position de régime maxi et la position de ralenti.

Lorqu'à l'état non alimenté de l'organe de régulation 100, l'utilisateur enfonce violemment la pédale d'accélérateur 30, la gaine 255 est sollicitée vers sa position d'extension maximale. Simultanément le maneton secondaire 220 est sollicité vers une position parallèle à la gaine 255. Ainsi, lorsque la pédale d'accélérateur 30 arrive en butée, le maneton secondaire 220 n'est pas bloqué brutalement mais peut osciller légèrement de part et d'autre de sa disposition parallèle à la gaine 255. Tout risque de détérioration de l'organe de régulation 100 est donc évité.

Par ailleurs si l'organe de régulation 100 devient accidentellement déficient suite à une panne électrique, c'est-à-dire que la maneton secondaire 220 devient libre de pivoter autour de son axe 222, lorsque l'utilisateur appuie à fond sur la pédale d'accélérateur la gaine 255 et le maneton secondaire 220 sont sollicités vers une position de régulation. Le véhicule ne peut donc dépasser la vitesse maximale autorisée.

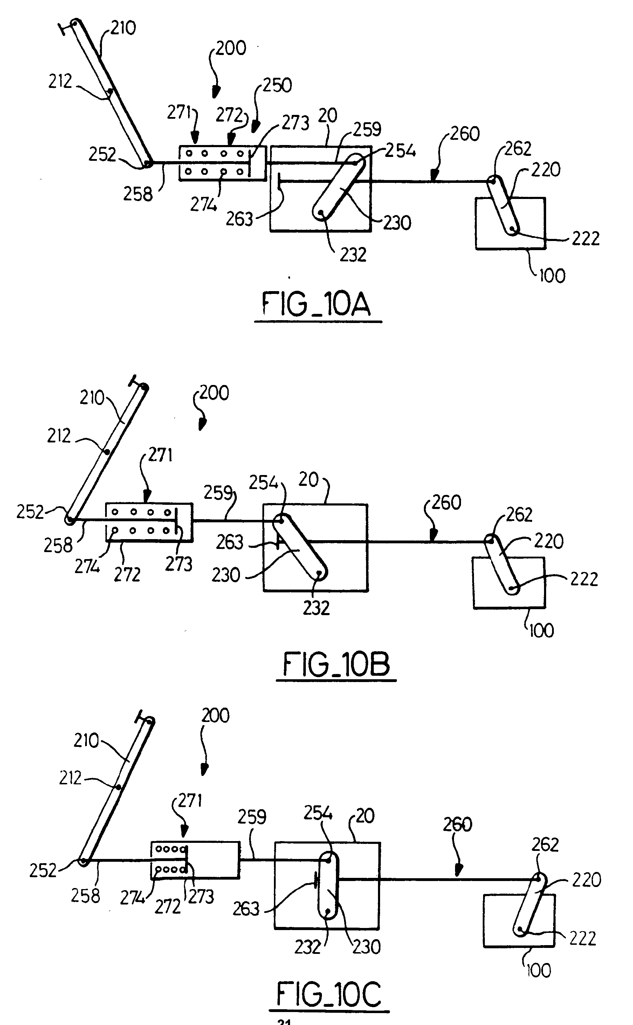

On a représenté sur les figures 10A, 10B et 10C un troisième mode de réalisation dans lequel l'ensemble de transmission 200 comprend :

– un maneton principal 210 porté à pivotement par la pédale d'accélérateur 30 autour d'un axe 212,

– un levier 230 lié à l'organe doseur de carburant 20 du moteur principal et susceptible de pivotement par rapport au carter de cet organe 20 autour d'un axe 232,

– un élément principal de liaison 250 qui relie le maneton principal 210 et le levier 230,

– un maneton secondaire 220 porté par l'arbre de sortie du réducteur de vitesse 120 pour pivoter autour de l'axe 222, et

– un élément secondaire de liaison 260 articulé sur le maneton secondaire 220, qui définit une butée mobile pour le levier 230.

L'axe d'articulation de l'élément secondaire de liaison 260 sur le maneton secondaire 220 est référencé 262. La butée portée par l'élément secondaire de liaison est référencée schématiquement 263.

L'élément principal de liaison 250 est équipé d'un système élastique de compensation en longueur 271. Selon l'exemple de réalisation illustré sur les figures 10A, 10B, 10C annexées le système 271 comprend un corps 272 qui reçoit un piston 273. Un ressort 274 sollicite le piston 273 en position rétractée à l'intérieur du corps 272.

Par ailleurs, l'élément principal de liaison 250 est formé de deux sections 258, 259. La section 258 est articulée en 252 sur le maneton principal 210. La seconde section 259 est articulée en 254 sur le levier 230.

Lorsque la pédale d'accélérateur 30 est non enfoncée et le maneton secondaire 220 est en position de consigne initiale comme illustré sur la figure 10A, le levier 230 est en position de repos, donc de régime ralenti. La butée 263 est éloignée du levier 230.

Lorsque la pédale d'accélérateur est enfoncée comme illustré sur la figure 10B, le levier 230 est déplacé vers sa position de régime maxi.

Si la vitesse réelle du véhicule dépasse la vitesse maxi imposée, le maneton secondaire 220 est déplacé vers sa position de limitation maximale comme illustré sur la figure 10C pour ramener le levier 230 dans une position intermédiaire entre la position de régime maxi et la position de ralenti, grâce à la butée 263.

On notera que comme illustré sur la figure 10C, ce déplacement induit une modification de la longueur du système de compensation 271, en l'espèce un allongement selon l'illustration donnée sur les figures 10 annexées.

Les deux sections 258, 259 de l'élément principal de liaison 250 ainsi que l'élément secondaire de liaison 260 peuvent être formés soit d'un câble soit d'une tringle.

Si le levier 230 vient en appui contre la butée 263, lorsqu'à l'état non alimenté de l'organe de régulation 100, l'utilisateur enfonce violemment la pédale d'accélérateur 30, l'élément secondaire de liaison 260 est sollicité vers une disposition coplanaire avec les axes 222 et 262. Le maneton secondaire 220 n'est pas bloqué brutalement, mais peut osciller légèrement de part et d'autre de cette disposition coplanaire. Tout risque de détérioration de l'organe de régulation 100 est donc évité.

Par ailleurs, de préférence, l'organe de régulation 100 est sollicité vers sa position de limitation maximale par un ressort (non représenté sur les figures pour simplifier l'illustration). Ainsi l'organe de régulation devient accidentellement déficient suite à une panne électrique, c'est-à-dire que le maneton secondaire 220 devient libre de rotation autour de son axe 222, le maneton secondaire 220 est sollicité vers la position de régulation maximale. Le véhicule ne peut donc dépasser la vitesse maximale autorisée.

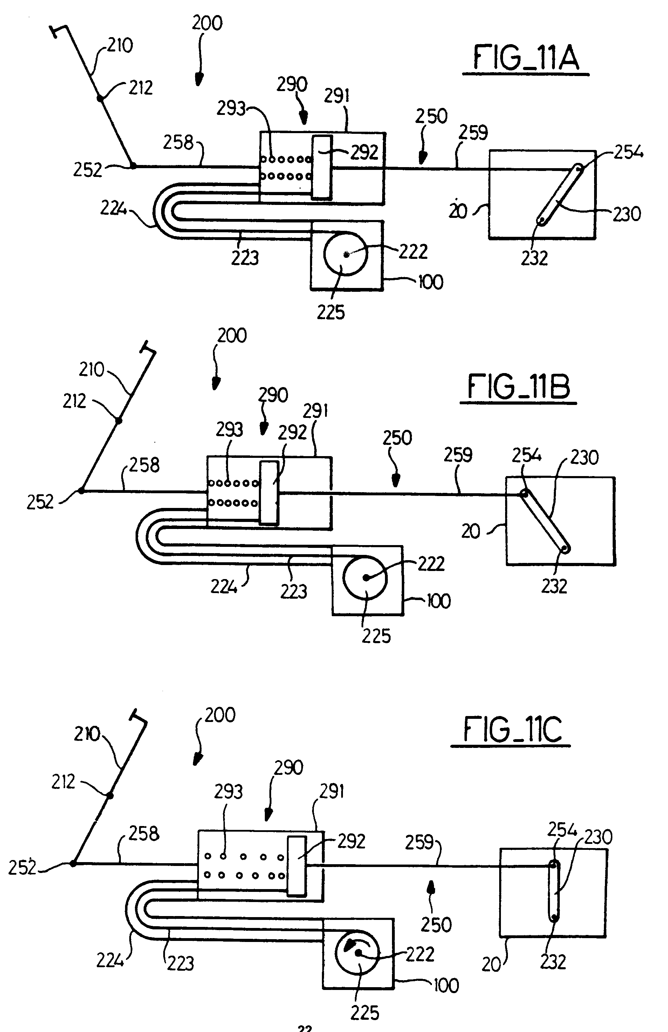

On a représenté sur les figures 11A, 11B et 11C un quatrième mode de réalisation dans lequel l'ensemble de transmission 200 comprend :

– un maneton principal 210 porté à pivotement par la pédale d'accélérateur 30 autour d'un axe 212,

– un levier 230 lié à l'organe doseur de carburant 20 du moteur principal et susceptible de pivotement par rapport au carter de cet organe 20 autour d'un axe 232,

– un élément principal de liaison 250 qui relie le maneton principal 210 et le levier 230, et un élément 290 commandé par l'organe de régulation 100 pour modifier la longueur active de l'élément principal de liaison 250.

Selon le mode de réalisation illustré sur les figures 11 annexées, l'élément 290 est formé d'un vérin comprenant un corps 291 qui loge un piston 292 et un ressort 293 qui sollicite le piston 292 vers une position de repos par rapport au corps 291.

Selon la représentation des figures 11 annexées, le ressort 293 sollicite le piston 292 en expansion à l'extérieur du corps 291.

L'élément principal de liaison 250 est formé de deux sections 258, 259.

La section 258 est articulée sur le maneton principal 210 en 252. La section 259 est articulée sur le levier 230 en 254. Par ailleurs, les sections 258 ou 259 sont reliées respectivement au corps 291 et au piston 292.

La longueur de l'élément 290 est réglée par l'organe de régulation 100 par l'intermédiaire d'un ensemble comprenant un câble 223 logé dans une gaine 224.

Selon la représentation donnée sur les figures 11 la gaine 224 prend appui sur le corps 291 tandis que le câble 223 est relié, d'une part, au piston 292 et, d'autre part, à une poulie 225 portée par l'arbre de sortie du réducteur 120.

Lorsque l'organe de régulation 100 exerce une traction sur le câble 223 le piston 292 est tiré à l'intérieur du corps 291. La longueur de l'élément principal de liaison 250 décroît. Inversement, lorsque l'organe de régulation 100 relâche le câble 223, le piston 292 est sollicité vers l'extérieur du corps 291 par le ressort 293.

Lorsque la pédale d'accélérateur 30 est non enfoncée, l'organe de régulation 100 est en position de consigne initiale, comme illustré sur la figure 11A, le levier 230 est en position de repos, donc de régime ralenti. Le piston 292 est retenu à l'intérieur du corps 291 par le câble 223 à l'encontre de la sollicitation exercée par le ressort 293.

Lorsque la pédale d'accélérateur 30 est enfoncée, comme illustré sur la figure 11B, le levier 230 est déplacé vers sa position de régime maxi.

Si la vitesse réelle du véhicule dépasse la vitesse maxi imposée, l'organe de régulation 100 est déplacé vers sa position de limitation maximale comme illustré sur la figure 11C pour relâcher le piston 292, allonger l'élément principal de liaison 250 et donc ramener le levier 230 dans une position intermédiaire entre la position de régime maxi et la position de ralenti.

Les deux sections 258, 259, composant l'élément principal de liaison 250 peuvent être formées soit de câbles soit de tringles.

La liaison par câble entre l'organe de régulation 100 et l'élément 290 ainsi que le ressort 293 intégré à cet élément évitent que l'organe de régulation 100 ne soit pas bloqué brutalement, lorsqu'à l'état non alimenté de l'organe de régulation 100, l'utilisateur enfonce ou relâche violemment la pédale d'accélérateur.

Par ailleurs si l'organe de régulation 100 devient accidentellement déficient, suite à une panne électrique, c'est-à-dire que le maneton secondaire 220 devient libre de rotation autour de son axe 222, lorsque l'utilisateur appuie à fond sur la pédale d'accélérateur, le maneton secondaire 220 est sollicité vers la position de régulation maximale. Le véhicule ne peut donc dépasser la vitesse maximale autorisée.

## Revendications

1. Régulateur de vitesse pour véhicule automobile comprenant :
   – un organe de régulation (100) comportant un moteur électrique (110) piloté par un signal issu d'un circuit de contrôle (50) sensible à la vitesse du véhicule, et un réducteur de vitesse à engrenages (120) entraîné par l'arbre de sortie du moteur électrique (110) et
   – un ensemble de transmission (200) actionné d'une part, par la pédale d'accélérateur (30) du véhicule, d'autre part, par l'arbre de sortie du réducteur pour commander un organe doseur de carburant (20) du moteur principal,
caractérisé par le fait que ni le moteur électrique (110) ni le réducteur de vitesse à engrenages (120) de l'organe de régulation (100) ne comportent de butées mécaniques, de telle sorte que l'arbre de sortie du réducteur de vitesse est susceptible de rotation sur 360°.

2. Régulateur de vitesse selon la revendication 1, caractérisé par le fait que le déplacement de la pédale d'accélérateur (30) de sa position de repos vers sa position d'enfoncement maximal et le déplacement de l'organe de régulation (100) de sa position de consigne initiale vers sa position de régulation maximale produisent des effets antagonistes sur l'ensemble de transmission (200).

3. Régulateur de vitesse selon l'une des revendications 1 et 2, caractérisé par le fait que l'organe de régulation (100) est équipé d'un codeur angulaire (130).

4. Régulateur de vitesse selon la revendication 3, caractérisé par le fait que le codeur angulaire (130) est formé d'un potentiomètre comprenant une piste (132) annulaire en couronne s'étendant sur environ 360°.

5. Régulateur de vitesse selon la revendication 4, caractérisé par le fait que la piste annulaire en couronne (132) du codeur angulaire (130) comprend un secteur résistif (134) de part et d'autre duquel sont placés des secteurs conducteurs (137, 138) eux-mêmes séparés par une fente radiale (136).

6. Régulateur de vitesse selon la revendication 5, caractérisé par le fait que l'ouverture angulaire du secteur résistif (134) est égale au débattement angulaire de l'organe de régulation (120) entre sa position de consigne initiale et sa position de régulation maximale.

7. Régulateur de vitesse selon l'une des revendications 5 ou 6, caractérisé par le fait que l'ouverture angulaire du secteur résistif (134) est de l'ordre de 90°.

8. Régulateur de vitesse selon l'une des revendications 1 à 7, caractérisé par le fait que l'ensemble de transmission (200) comprend :
   – un maneton principal (210) porté à pivotement par la pédale d'accélérateur (30),
   – un maneton secondaire (220) porté par l'arbre de sortie du réducteur de vitesse (120),
   – un levier (230) lié à l'organe doseur de carburant (20) du moteur principal et susceptible de pivotement par rapport au carter de cet organe (20),
   – une bielle (240) articulée sur le levier (230),
   – un élément principal de liaison (250) qui relie le maneton principal (210) et la bielle (240), et
   – un élément secondaire de liaison (260) qui relie le maneton secondaire (220) et la bielle (240).

9. Régulateur de vitesse selon la revendication 8, caractérisé par le fait qu'en position d'enfoncement maximal de la pédale d'accélérateur (30), les axes d'articulation (262, 264) de l'élément secondaire de liaison (260), sur le maneton secondaire (220) et la bielle (240), et l'axe (222) de l'arbre de sortie du réducteur (120) sont généralement coplanaires.

10. Régulateur de vitesse selon la revendication 9, caractérisé par le fait que lorsque les axes d'articulation (262, 264) de l'élément secondaire de liaison (260), sur le maneton secondaire (220) et la bielle (240), et l'axe (222) de l'arbre de sortie du réducteur sont coplanaires, l'organe de régulation (100) occupe sa position de régulation maximale.

11. Régulateur de vitesse selon l'une des revendications 8 à 10, caractérisé par le fait que la distance séparant l'axe (232) du levier (230) et l'axe d'articulation (242) de la bielle (240) sur le levier est égale à la distance séparant l'axe d'articulation (264) de l'élément secondaire de liaison (260) sur la bielle (240) et l'axe d'articulation (242) de la bielle (240) sur le levier (230).

12. Régulateur de vitesse selon la revendication 11, caractérisé par le fait qu'en position de repos de la pédale d'accélérateur (30) et en position de consigne initiale du maneton secondaire (220), l'axe (232) du levier (230) est coaxial de l'axe d'articulation (264) de l'élément secondaire de liaison (260) sur la bielle (240).

13. Régulateur de vitesse selon l'une des revendications 1 à 7, caractérisé par le fait que l'ensemble de transmission (200) comprend :
– un maneton principal (210) porté à pivotement par la pédale d'accélérateur (30),
– un levier (230) lié à l'organe doseur de carburant (20) du moteur principal et susceptible de pivotement par rapport au carter de cet organe (20),
– un élément principal de liaison (250) qui relie le maneton principal (210) et le levier (230),
– un maneton secondaire (220) porté par l'arbre de sortie du réducteur de vitesse (120), et
– un élément secondaire de liaison (260) articulé sur le maneton secondaire (220) qui définit une butée mobile (263) pour le levier.

14. Régulateur de vitesse selon l'une des revendications 8 à 13 caractérisé par le fait que l'un au moins des éléments de l'ensemble de transmission (200) est équipé d'un système élastique de compensation en longueur (270).

15. Régulateur de vitesse selon la revendication 14, caractérisé par le fait que l'élément principal de liaison (250) est équipé d'un système élastique de compensation en longueur (270).

16. Régulateur de vitesse selon l'une des revendications 8 à 15, caractérisé par le fait que l'un au moins des éléments de liaison, principal (250) et secondaire (260), comprend une tringle.

17. Régulateur de vitesse selon l'une des revendications 8 à 15, caractérisé par le fait que l'un au moins des éléments de liaison, principal (250) et secondaire (260), comprend un câble.

18. Régulateur de vitesse selon l'une des revendications 1 à 7, caractérisé par le fait que l'ensemble de transmission (200) comprend :
– un maneton principal (210) porté à pivotement par la pédale d'accélérateur (30),
– un levier (230) lié à l'organe doseur de carburant (20) du moteur principal et susceptible de pivotement par rapport au carter de cet organe (20),
– un élément principal de liaison (250) qui relie le maneton principal (210) et le levier (230), et
– un élément secondaire (255, 290) commandé par l'organe de régulation pour modifier la longueur active de l'élément principal de liaison (250).

19. Régulateur de vitesse selon la revendication 18, caractérisé par le fait que l'élément principal de liaison (250) est formé d'un cable et l'élément commandé par l'organe de régulation est formé d'une gaine (255) qui reçoit le câble et dont une extrémité (257) est déplaçable par l'organe de régulation (100).

20. Régulateur de vitesse selon la revendication 18, caractérisé par le fait que l'élément principal de liaison est équipé d'un vérin (290) composé d'un corps (291) recevant un piston (292), que le corps et le piston sont reliés l'un au maneton principal (210), l'autre au levier (230) et que la position relative du piston (292) et du corps (291) est réglée par l'organe de régulation.

21. Régulateur de vitesse selon la revendication 20, caractérisé par le fait que la position relative du piston (292) et du corps (291) est réglée par l'intermédiaire d'un ensemble à gaine (224) et câble (223), dont le câble est commandé par l'organe de régulation.

22. Régulateur de vitesse selon l'une des revendications 8 à 21, caractérisé par le fait que le maneton principal (210) est sollicité élastiquement vers une position de repos.

23. Régulateur de vitesse selon l'une des revendications 8 à 22, caractérisé par le fait que le levier (230) est sollicité élastiquement vers une position de repos.

24. Régulateur de vitesse selon l'une des revendications 8 à 23, caractérisé par le fait que l'un au moins des éléments de l'ensemble de transmission (200) est équipé de moyens de réglage en longueur (280).

**Patentansprüche**

1. Vorrichtung zum Regeln der Geschwindgkeit eines Kraftfahrzeuges, mit
– einem Regelglied (100), das einen Elektromotor (110), der durch ein Signal gesteuert ist, das von einer auf die die Geschwindigkeit des Fahrzeuges ansprechende Steuerschaltung (50) abgegeben wird, und ein Drehzahluntersetzungsgetriebe (120) aufweist, das von der Abtriebswelle des Elektromotors (110) angetrieben ist, und
– einer Transmissionsanordnung (200), die einerseits durch das Gaspedal (30) des Fahrzeugs, und zum anderen durch die Abtriebswelle des Untersetzungsgetriebes betätigt wird, um ein Mittel zum Dosieren von Kraftstoff des Antriebsmotors zu steuern,
dadurch gekennzeichnet, daß weder der Elektromotor (110), noch das Drehzahluntersetzungsgetriebe (120) des Regelgliedes (100) mechanische Anschläge aufweist, so daß die Abtriebswelle des Drehzahluntersetzungsgetriebes in der Lage ist, Drehungen von mehr als 360° auszuführen.

2. Vorrichtung zum Regeln der Geschwindigkeit nach Anspruch 1, dadurch gekennzeichnet, daß die Verschiebung des Gaspedales (30) aus seiner Ruhelage in seine maximal durchgetrete Stellung und die Verstellung des Regelgliedes (100) aus seiner vorgesehenen ursprünglichen Stellung in seine maximal Regelstellung entgegengesetzte Wirkungen auf die Transmissionsanordnung (200) ausüben.

3. Vorrichtung zum Regeln der Geschwindigkeit nach einem der Ansprüche 1 oder 2, dadurch gekennzeichnet, daß das Regelglied (100) mit einem codierten Winkelgeber (130) ausgestattet ist.

4. Vorrichtung zum Regeln der Geschwindigkeit nach Anspruch 3, dadurch gekennzeichnet, daß der codierte Winkelgeber (130) durch ein Potentiometer gebildet ist, das eine ringförmige Widerstandsbahn aufweist, die sich auf 360° erstreckt.

5. Vorrichtung zum Regeln der Geschwindigkeit nach Anspruch 4, dadurch gekennzeichnet, daß die ringförmige Widerstandsbahn (132) des codierten Winkelgebers (130) durch einen Widerstandsabschnitt (134) in einem Teil und durch leitfähige Abschnitte (137, 138) in anderen Teilen gebildet ist, die durch einen radialen Schlitz (136) voneinander getrennt sind.

6. Vorrichtung zum Regeln der Geschwindigkeit nach Anspruch 5, dadurch gekennzeichnet, daß die Winkelöffnung des Widerstandsabschnitts (134) gleich dem Winkeleinschlag des Regelgliedes (120) zwischen seiner vorgesehenen ursprünglichen Stellung und seiner maximalen Regelstellung ist.

7. Vorrichtung zum Regeln der Geschwindigkeit nach einem der Ansprüche 5 oder 6, dadurch gekennzeichnet, daß die Winkelöffnung des Widerstandsabschnitts (134) in der Größenordnung von 90° ist.

8. Vorrichtung zum Regeln der Geschwindigkeit nach Anspruch 1 bis 7, dadurch gekennzeichnet, daß die Transmissionsanordnung (200)
– einen ersten Kurbelzapfen (210), der schwenkbar mit dem Gaspedal (30) verbunden ist,
– einen zweiten Kurbelzapfen (220), der mit der Abtriebswelle des Drehzahluntersetzungsgetriebes (120) verbunden ist,
– einen Hebel (230), der mit dem Mittel zum Dosieren von Kraftstoff (20) des Antriebsmotors gekoppelt ist, und durch die Beziehung zu dem Gehäuse dieses Mittels (20) verschwenkbar ist.
– einen Pleuel (240), der an dem Hebel (230) angelenkt ist,
– ein erstes Verbindungselement (250), das mit dem ersten Kurbelzapfen (210) und dem Pleuel (240) verbunden ist, und
– ein zweites Verbindungselement (260) das mit dem zweiten Kurbelzapfen (220) und dem Pleuel (240) verbunden ist, aufweist.

9. Vorrichtung zum Regeln der Geschwindigkeit nach Anspruch 8, dadurch gekennzeichnet, daß die maximale Verschiebung des Gaspedales (30), die Schwenkachsen (262, 264) des zweiten Verbindungselementes (260) auf dem zweiten Kurbelzapfen (220) und dem Pleuel (240), und die Achse (222) der Abtriebswelle des Drehzahluntersetzungsgetriebes (120) im wesentlichen koplanar sind.

10. Vorrichtung zum Regeln der Geschwindigkeit nach Anspruch 9, dadurch gekennzeichnet, daß wenn die Schwenkachsen (262, 264) des zweiten Verbindungselementes (260) auf dem zweiten Kurbelzapfen (220) und dem Pleuel (240), und die Achse (222) der Abtriebswelle des Drehzahluntersetzungsgetriebes (120) koplanar sind, das Regelglied (100) seine maximale Regelstellung einnimmt.

11. Vorrichtung zum Regeln der Geschwindigkeit nach einem der Ansprüche 8 bis 10, dadurch gekennzeichnet, daß der Abstand zwischen der Achse (232) des Hebels (230) und der Schwenkachse (242) des Pleuels (240) auf dem Hebel gleich dem Abstand zwischen der Schwenkachse (264) des zweiten Verbindungselementes (260) und der Schwenkachse (242) des Pleuels (240) auf dem Hebel (230) ist.

12. Vorrichtung zum Regeln der Geschwindigkeit nach Anspruch 11, dadurch gekennzeichnet, daß in der Ruhestellung des Gaspedales (30) und in der vorgesehenen ursprünglichen Stellung des zweiten Kurbelzapfens (220), die Achse (232) des Hebels (230) koaxial zu der Schwenkachse (264) des zweiten Verbindungselementes (260) auf dem Pleuel (240) ist.

13. Vorrichtung zum Regeln der Geschwindigkeit nach einem der Ansprüche 1 bis 7, dadurch gekennzeichnet, daß die Transmissionsanordnung (200)
– einer ersten Kurbelzapfen (210), der schwenkbar mit dem Gaspedal (30) verbunden ist,
– einen Hebel (230), der mit dem Mittel zum Dosieren von Kraftstoff (20) des Antriebsmotors gekoppelt ist, und durch die Beziehung zu dem Gehäusse dieses Mittels (20) verschwenkbar ist,
– ein erstes Verbindungselement (250), das mit dem ersten Kurbelzapfen (210) und dem Hebel (230) verbuden ist,
– einen zweiten Kurbelzapfen (220), der mit der Abtriebswelle des Drehzahluntersetzungsgetriebes (120) verbuden ist, und
– ein zweites Verbindungselement (260) das auf dem zweiten Kurbelzapfen (220) verschwenkbar ist und einen beweglichen Anschlag (263) für den Hebel bildet, aufweist.

14. Vorrichtung zum Regeln der Geschwindigkeit nach einem der Ansprüche 8 bis 13, dadurch gekennzeichnet, daß wenigstens eines der Elemente der Transmissionsanordnung (200) mit einem elastischen System zur Längenkompensation (270) ausgestattet ist.

15. Vorrichtung zum Regeln der Geschwindigkeit nach Anspruch 14, dadurch gekennzeichnet, daß das erste Verbindungselement (250) mit einem elastischen System zur Längenkompensation (270) ausgestattet ist.

16. Vorrichtung zum Regeln der Geschwindigkeit nach einem der Ansprüche 8 bis 15, dadurch gekennzeichnet, daß wenigstens eines der ersten (250) oder der zweiten Verbindungselemente (260) eine Stange aufweist.

17. Vorrichtung zum Regeln der Geschwindigkeit nach einem der Ansprüche 8 bis 15, dadurch gekennzeichnet, daß wenigstens eines der ersten (250) oder der zweiten Verbindungselemente (260) ein Kabel aufweist.

18. Vorrichtung zum Regeln der Geschwindigkeit nach einem der Ansprüche 1 bis 7, dadurch gekennzeichnet, daß die Transmissionsanordnung (200)
– einen ersten Kurbelzapfen (210), der schwenkbar mit dem Gaspedal (30) verbuden ist,
– einen Hebel (230), der mit dem Mittel zum Dosieren von Kraftstoff (20) des Antriebsmotors gekoppelt ist, und durch die Beziehung zu dem Gehäuse dieses Mittels (20) verschwenkbar ist,
– ein erstes Verbindungselement (250), das mit dem ersten Kurbelzapfen (210) und dem Hebel (230) verbunden ist, und
– ein zweites Element (255, 290) das durch das Regelmittel gesteuert ist, um die aktive Länge des ersten Verbindungselementes (250) zu verändern, aufweist.

19. Vorrichtung zum Regeln der Geschwindigkeit nach Anpruch 18, dadurch gekennzeichnet, daß das erste Verbindungselement (250) durch ein Kabel gebildet ist, und das durch das Regelmittel gesteuerte Element durch eine Ummantelung (255) gebildet ist, die das Kabel in sich aufnimmt und dessen eines Ende (257) durch das Regelmittel (100) verschiebbar ist.

20. Vorrichtung zum Regeln der Geschwindigkeit nach Anpruch 18, dadurch gekennzeichnet, daß das erste Verbindungselement (250) mit einer Zylinder-Kolben-Anordnung (290) ausgestattet ist, die durch ein Gehäuse (291), das einen Kolben (292) aufnimmt, gebildet ist, wobei das Gehäuse und der Kolben einerseits mit dem ersten Kurbelzapfen (210) und andererseits mit dem Hebel (230) verbunden sind, und wobei die Stellung des Kolbens (292) relativ zu dem Gehäusse (291) durch das Regelmittel geregelt ist.

21. Vorrichtung zum Regeln der Geschwindigkeit nach Anspruch 20, dadurch gekennzeichnet, daß die Stellung des Kolbens (292) relativ zum dem Gehäuse (291) durch ein Zwischenstück einer Anordnung aus einer Ummantelung (224) und einem Kabel (223) geregelt ist, wobei das Kabel durch das Regelmittel gesteuert ist.

22. Vorrichtung zum Regeln der Geschwindigkeit nach einem der Ansprüche 8 bis 21, dadurch gekennzeichnet, daß der erste Kurbelzapfen (210) elastisch gegen eine Ruhelage gedrückt ist.

23. Vorrichtung zum Regeln der Geschwindigkeit nach einem der Ansprüche 8 bis 22, dadurch gekennzeichnet, daß der Hebel (230) elastisch gegen eine Ruhelage gedrückt ist.

24. Vorrichtung zum Regeln der Geschwindigkeit nach einem der Ansprüche 8 bi 23, dadurch gekennzeichnet, wenigstens eines der Elemente der Transmissionsanordnung (200) mit Mitteln zum Ausregeln der Länge (280) ausgestattet ist.

**Claims**

1. Speed regulator for motor vehicle comprising:
– a control device (100) comprising an electric motor (110) piloted by a signal from a pilot circuit (50) sensitive to the speed of the vehicle, and a speed reduction gear (120) driven by the output shaft of the electric motor (110) and
– a transmission unit (200) actuated on the one hand by the accelerator pedal (30) of the vehicle and on the other hand by the output shaft of the reducer for controlling a fuel metering device (20) of the main motor,
characterised in that neither the electric motor (110) nor the speed reduction gear (120) of the control device (100) comprise mechanical stops, so that the output shaft of the speed reducer is capable of rotating through 360°.

2. Speed regulator according to claim 1, characterised in that displacement of the accelerator pedal (30) from its rest position towards its position of maximum depression and displacement of the control device (100) from its initial control position towards its maximum adjustment position produce opposite effects on the transmission unit (200).

3. Speed regulator according to either of claims 1 or 2, characterised in that the control device (100) is equipped with an angle encoder (130).

4. Speed regulator according to claim 3, characterised in that the angle encoder (130) is formed by a potentiometer comprising an annular track (132) in form of a ring extending over approximately 360°.

5. Speed regulator according to claim 4, characterised in that the annular track (132) in form of a ring of the angle encoder (130) comprises a resistive sector (134), on either side of which are located conducting sectors (137, 138), which are themselves separated by a radial slot (136).

6. Speed regulator according to claim 5, characterised in that the angular aperture of the resistive sector (134) is equal to the angular clearance of the control device (120) between its initial control position and its position of maximum adjustment.

7. Speed regulator according to either of claims 5 or 6, characterised in that the angular aperture of the resistive sector (134) is of the order of 90°.

8. Speed regulator according to one of claims 1 to 7, characterised in that the transmission unit (200) comprises:
   – a main crank pin (210) caused to pivot by the accelerator pedal (30),
   – a secondary crank pin (220) carried by the output shaft of the speed reducer (120),
   – a lever (230) connected to the fuel metering device (20) of the main motor and capable of pivoting relative to the housing of said device (20),
   – a coupler (240) pivotally connected to the lever (230),
   – a main link element (250) connecting the main crank pin (210) to the coupler (240) and
   – a secondary link element (260) connecting the secondary crank pin (220) to the coupler (240).

9. Speed regulator according to claim 8, characterised in that when the accelerator pedal (30) is in its position of maximum depression, the pivotal axes (262, 264) of the secondary link element (260) on the secondary crank pin (220) and the coupler (240), and the axis (222) of the output shaft of the reducer (120) are generally coplanar.

10. Speed regulator according to claim 9, characterised in that when the pivotal axes (262, 264) of the secondary link element (260), on the secondary crank pin (220) and the coupler (240), and the axis (222) of the output shaft of the reducer are coplanar, the control device (100) occupies its position of maximum adjustment.

11. Speed regulator according to one of claims 8 to 10, characterised in that the distance separating the axis (232) of the lever (230) and the pivotal axis (242) of the coupler (240) on the lever is equal to the distance separating the pivotal axis (264) of the secondary link element (260) on the coupler (240) and the pivotal axis (242) of the coupler (240) on the lever (230).

12. Speed regulator according to claim 11, characterised in that when the accelerator pedal (30) is in the rest position and the secondary crank pin (220) is in the initial control position, the axis (232) of the lever (230) is coaxial to the pivotal axis (264) of the secondary link element (260) on the coupler (240).

13. Speed regulator according to one of claims 1 to 7, characterised in that the transmission unit (200) comprises:
   – a main crank pin (210) caused to pivot by the accelerator pedal (30),
   – a lever (230) connected to the fuel metering device (20) of the main motor and capable of pivoting relative to the housing of said device (20),
   – a main link element (250) connecting the main crank pin (210) to the lever ( 230)
   – a secondary crank pin (220) carried by the output shaft of the speed reducer (120),
   – a secondary link element (260) pivotably connected to the secondary crank pin (220) which defines a mobile stop (263) for the lever.

14. Speed regulator according to one of claims 8 to 13, characterised in that at least one of the elements of the transmission unit (200) is equipped with an elastic length-compensating system (270).

15. Speed regulator according to claim 14, characterised in that the main link element (250) is equipped with an elastic length-compensating system (270).

16. Speed regulator according to one of claims 8 to 15, characterised in that at least one of the main (250) and secondary (260) link elements comprises a rod.

17. Speed regulator according to one of claims 8 to 15, characterised in that at least one of the main (250) and secondary (260) link elements comprises a cable.

18. Speed regulator according to one of claims 1 to 7, characterised in that the transmission unit (200) comprises:
   – a main crank pin (210) caused to pivot by the accelerator pedal (30),
   – a lever (230) connected to the fuel metering device (20) of the main motor and capable of pivoting relative to the housing of said device (20),
   – a main link element (250) connecting the main crank pin (210) to the lever (230), and
   – a secondary element (255, 290) controlled by the control device in order to modify the active length of the main link element (250).

19. Speed regulator according to claim 18, characterised in that the main link element (250) is formed of a cable and the element controlled by the control device is formed by a sheath (255) which receives the cable and one end (257) of which is displaceable by the control device (100).

20. Speed regulator according to claim 18, characterised in that the main link element is equipped with an actuator (290) consisting of a body (291) receiving a piston (292), in that the body and the piston are connected to the main crank pin (210) and to the lever (230) respectively, and in that the relative position of the piston (292) and of the body (291) is controlled by the control device.

21. Speed regulator according to claim 20, characterised in that the relative position of the piston (292) and of the body (291) is controlled via an assembly with a sheath (224) and cable (223), the cable being controlled by the control device.

22. Speed regulator according to one of claims 8 to 21, characterised in that the main crank pin (210) is biased resiliently towards a rest position.

23. Speed regulator according to one of claims 8 to 22, characterised in that the lever (230) is biased resiliently towards a rest position.

24. Speed regulator according to one of claims 8 to 23, characterised in that at least one of the elements of the transmission unit (200) is equipped with elastic length-adjusting means (280).

## FIG.1
## Etat de la technique

Système doseur (pompe injection) — 20

Organe de régulation — 40

Capteur vitesse — 51

Moteur — 41

Comparateur — 53

Pédale — 30

Transmission (tringlerie ou cable) — 10

Réducteur avec butées mécaniques — 42

Consigne — 52

50

## FIG.2

Organe de régulation — 100

Capteur vitesse — 51

Système doseur (pompe injection) — 20

Moteur — 110

Comparateur — 53

Pédale — 30

Transmission (tringlerie ou cable) — 200

Réducteur sans butée mécanique et avec codeur angulaire — 120, 130

Consigne — 52

50

FIG_3

FIG_4

EP 0 346 223 B1

FIG_5

FIG_8

FIG_6

EP 0 346 223 B1

FIG_7

EP 0 346 223 B1

FIG_9A

FIG_9B

FIG_9C

20

FIG_10A

FIG_10B

FIG_10C

FIG_11A

FIG_11B

FIG_11C